# EUROPEAN PATENT APPLICATION

(11) **EP 4 714 805 A1**
(43) Date of publication of application: **25.03.2026**
(21) Application number: 25203187.7
(22) Date of filing: 18.09.2025
(51) Int. Cl.: B62D 35/02, B62D 37/02

(54) **WHEEL AERODYNAMIC DEVICE**

(30) Priority: 19.09.2024 GB 202413816
(71) Applicant: McLaren Automotive Limited, Woking, Surrey GU21 4YH (GB)
(72) Inventor: Algoo, Robin, GU21 4YH Woking (GB)
(74) Representative: Slingsby Partners LLP

(57) **Abstract**

Disclosed is an aerodynamic device (200, 800) for guiding airflow around a wheel (201) of a vehicle (700), the device comprising: a wheel well (202) defining a wheel cavity (203) arranged to receive the wheel, the wheel cavity comprising an inlet (204) and an outlet (205), so that when the vehicle is in forward motion, incoming airflow (210) enters the wheel cavity at the inlet, moves through the wheel cavity, and exits the wheel cavity at the outlet; and an aerodynamic body (206) located in the wheel cavity and between the wheel well and the wheel, the aerodynamic body defining a first passage (208) between the aerodynamic body and the wheel well and a second passage (209) between the aerodynamic body and the wheel, so that when the incoming airflow moves through the wheel cavity, the incoming airflow is divided into a first airflow through the first passage and a second airflow through the second passage.

## Description

This invention relates to an aerodynamic device for guiding airflow around a wheel of a vehicle.

Vehicles comprise body panels for covering the internal parts of the vehicle. The body panels may be used to guide the incoming airflow over the vehicle. Additionally, further panels may be attached to the body panels to further guide the incoming airflow over the vehicle. Such panels which guide incoming airflow may be known as aerodynamic bodies. High performance vehicles, such as supercars, may have multiple aerodynamic bodies, with specific designs, to optimise the aerodynamics of the vehicle. The aerodynamic bodies may also be movable relative to one another and/or relative to the vehicle. The aerodynamic bodies may be fitted to different parts of the vehicle, such as the underside, the roof, the front and/or the rear of the vehicle.

Aerodynamic bodies may guide the incoming airflow so as to provide lift and/or downforce forces on the vehicle. This may be beneficial for increased vehicle speed, particularly in corners. Aerodynamic bodies may guide the incoming airflow so as to provide and/or reduce drag forces on the vehicle. This may be beneficial for reduced air resistance for increased vehicle speed, or increased air resistance for increased braking force. Aerodynamic bodies may guide the incoming airflow towards certain parts of the vehicle, such as air intakes used for cooling etc. It can be particularly advantageous to guide airflow out from the underside of the vehicle, down the sides of the vehicle, so as to increase downforce through a pressure differential between the underside of the vehicle and the free flow and/or provide a cooling flow such as to mid-engine radiator air intakes. Designing aerodynamic bodies to guide the airflow in a controlled and efficient manner can be challenging.

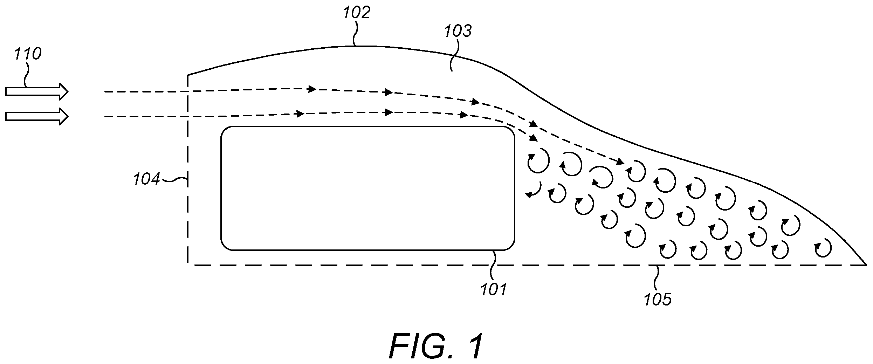

The airflow around the wheels of the vehicle can be inefficient. As airflow passes over and around the wheels, the airflow can become turbulent as passes rearwards of the wheel. Figure 1 illustrates an example wheel 101 located in the wheel cavity 103 of a wheel well 102. The wheel cavity 103 may comprise an inlet 104, through which incoming airflow 110 may pass. The incoming airflow 110 may pass through the cavity 103 and out of an outlet 105. As the incoming airflow 110 passes around the wheel 101, the airflow may become turbulent, as shown in Figure 1. The turbulent airflow behind the wheel 101 can be difficult to control, can cause increased drag, can cause interference with the aerodynamics on the underside of the vehicle, and can cause interference with the rear cooling. This can be particularly problematic for the front wheels 101 of a vehicle. The local incoming airflow velocity at the front wheels 101 can be much higher than the incoming airflow velocity to the rear wheels, as the front wheels 101 may see the full freestream incoming airflow. This higher level of airflow velocity can cause higher amounts of turbulence behind the front wheels 101.

Additionally, the incoming airflow to the wheels 101 can also be used to cool brake of the wheels. Designing a brake cooling inlet, which also does not generate increased turbulence, can be challenging.

It is therefore desirable for improved aerodynamic devices which address the aforementioned problems.

According to a first aspect of the present invention there is provided an aerodynamic device for guiding airflow around a wheel of a vehicle, the device comprising: a wheel well defining a wheel cavity arranged to receive the wheel, the wheel cavity comprising an inlet and an outlet, so that when the vehicle is in forward motion, incoming airflow enters the wheel cavity at the inlet, moves through the wheel cavity, and exits the wheel cavity at the outlet; and an aerodynamic body located in the wheel cavity and between the wheel well and the wheel, the aerodynamic body defining a first passage between the aerodynamic body and the wheel well and a second passage between the aerodynamic body and the wheel, so that when the incoming airflow moves through the wheel cavity, the incoming airflow is divided into a first airflow through the first passage and a second airflow through the second passage.

In some implementations, the aerodynamic body may comprise a leading edge, a trailing edge, at least two outboard edges and an aerodynamic surface extending therebetween.

In some implementations, the aerodynamic body may be located so that the aerodynamic surface between the leading edge and the trailing edge extends across at least a part of the width of a side of the wheel. In some implementations, the aerodynamic body may be located so that the aerodynamic surface between the leading edge and the trailing edge extends across at least the whole of the width of the side of the wheel.

In some implementations, the aerodynamic body may be located so that the aerodynamic surface extends rearwards of the wheel. In some implementations, the aerodynamic body may be located so that the aerodynamic surface extends between the leading edge and the trailing edge across at least a part of the width of a side of the wheel and wraps around the rear of the wheel.

In some implementations, the aerodynamic body may be located so that the trailing edge of the aerodynamic body is closer to the wheel than the leading edge of the aerodynamic body. In some implementations, the aerodynamic body may be located so that the aerodynamic surface becomes progressively closer to the wheel between the leading edge of the aerodynamic body and the trailing edge of the aerodynamic body.

In some implementations, the aerodynamic body may be located so that the aerodynamic surface between the two outboard edges extends across the whole of the height of the side of the wheel. In some implementations, the aerodynamic surface between the two outboard edges may extend parallel to the side of the wheel.

In some implementations, the aerodynamic body may comprise an aerofoil cross section. In some implementations, the aerodynamic body may comprise a planar shape.

In some implementations, the aerodynamic body may comprise: a rigid plate comprising an opening; a membrane spanning the opening of the plate and comprising a further opening.

In some implementations, the device may be arranged such that incoming airflow to the vehicle causes primary vortices to be generated off the outboard edges of the aerodynamic body.

In some implementations, the device may further comprise the wheel. The wheel may be received in the wheel cavity.

In some implementations, the device further comprises wheel mounting unit. The wheel may be mountable to the vehicle via the wheel mounting unit. In some implementations, the aerodynamic body is mounted to the wheel mounting unit.

In some implementations, the aerodynamic body may be mounted to the wheel well. In some implementations, the aerodynamic body may be mounted to the wheel.

In some implementations, the wheel mounting unit may extend through the further opening.

In some implementations, the device may further comprise one or more further aerodynamic bodies located rearwards of the aerodynamic body. In some implementations, one or more of the further aerodynamic bodies may be located rearwards of the wheel. In some implementations, one or more of the further aerodynamic bodies may be located in the wheel cavity. In some implementations, one or more of the further aerodynamic bodies may be located outside of the wheel cavity.

In some implementations, the device may be arranged such that incoming airflow to the vehicle causes secondary vortices to be generated off the outboard edges of the one or more further aerodynamic bodies.

In some implementations, the device may comprise a brake duct located in the wheel cavity and between the wheel well and the wheel, the brake duct defining a third passage between the brake duct and the wheel, so that when the incoming airflow moves through the wheel cavity, the incoming airflow is divided into the first airflow through the first passage, the second airflow through the second passage and a third airflow through the third passage, the third airflow being directed through the third passage to a brake of the wheel.

In some implementations, the aerodynamic body may be located rearwards of the brake duct. In some implementations, the brake duct may comprise a tube defining the third passage.

In some implementations, the device further may comprise the brake of the wheel.

According to a second aspect of the present invention there is provided a vehicle comprising the aerodynamic device.

In some implementations, the vehicle may further comprise a further aerodynamic device. The aerodynamic device and the further aerodynamic device may be configured for use with the front wheels of the vehicle respectively.

The present invention will now be described by way of example with reference to the accompanying drawings. In the drawings:
Figure 1 schematically illustrates a prior art wheel and wheel well.
Figure 2 schematically illustrates a first embodiment of an aerodynamic device for guiding airflow around a wheel of a vehicle.
Figure 3 schematically illustrates a second embodiment of the aerodynamic device for guiding airflow around a wheel of a vehicle.
Figure 4 schematically illustrates a third embodiment of the aerodynamic device for guiding airflow around a wheel of a vehicle.
Figure 5 schematically illustrates a close-up view of the first aerodynamic device.
Figure 6 schematically illustrates a front cross section of the first, second or third embodiments of the aerodynamic device.
Figure 7a schematically illustrates a side view of the first embodiment of the aerodynamic device. Figure 7b schematically illustrates a side view of the second embodiment of the aerodynamic device.
Figure 8 schematically illustrates a fourth embodiment of the aerodynamic device for guiding airflow around a wheel of a vehicle including a brake duct.
Figure 9 schematically illustrates a perspective view of the fourth embodiment of the aerodynamic device.
Figure 10 schematically illustrates a vehicle comprising two aerodynamic devices.

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The present invention relates to an aerodynamic device for guiding airflow around a wheel of a vehicle.

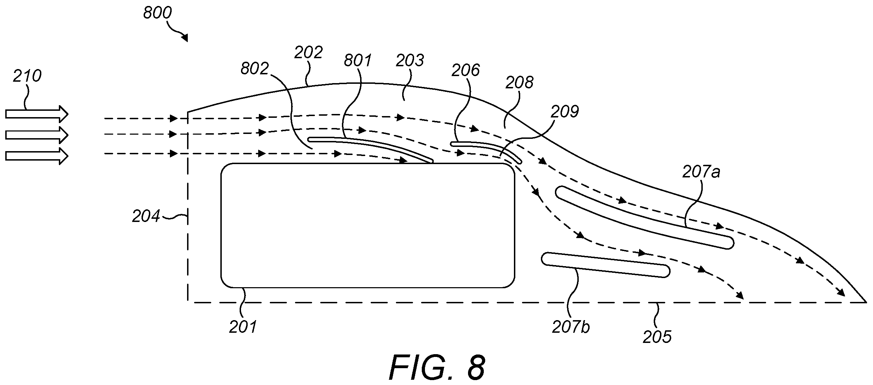

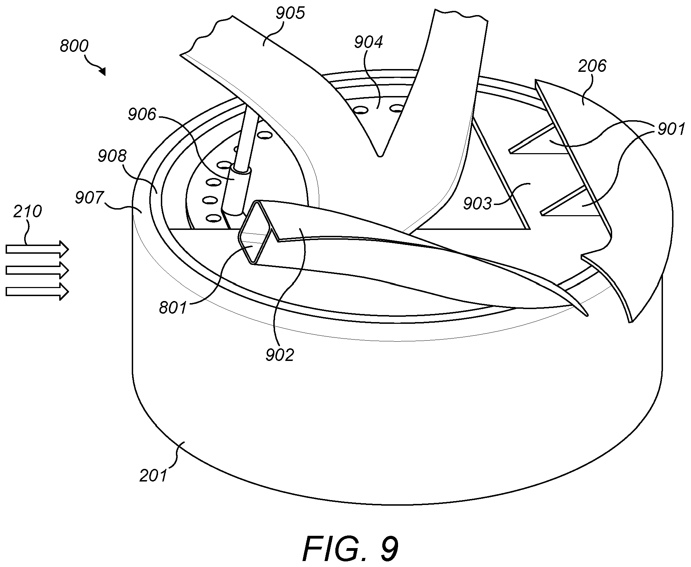

Figures 1 to 9 illustrate various embodiments of an aerodynamic device 200, 800. The Figures 1 to 7b illustrate an aerodynamic device 200 with an aerodynamic body 206. Figures 8 and 9 illustrate an aerodynamic device 800 with an aerodynamic body 206 and a brake duct 801.

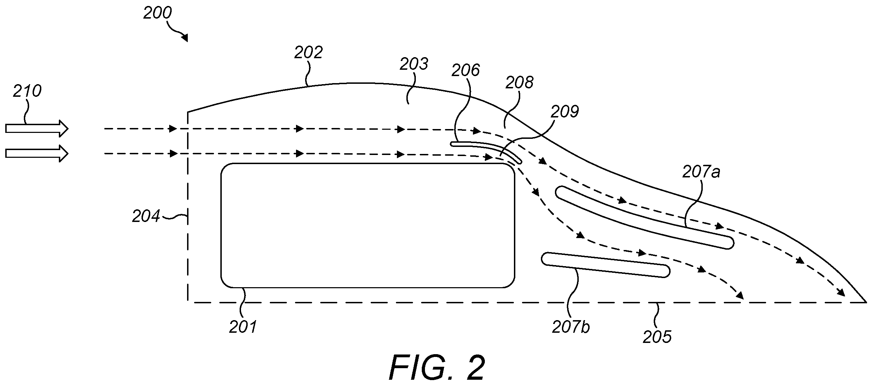

The aerodynamic device 200, 800 may comprise a wheel well 202. The wheel well 202 may define a wheel cavity 203. The wheel cavity 203 may be arranged to receive a wheel 201. The aerodynamic device 200, 800 may comprise the wheel 201. The wheel 201 may be located in the wheel cavity 203. The wheel well 202 may comprise a wall located inboard of the wheel 201. The wheel well 202 may comprise further wall(s) which extend behind and/or in front and/or above of the wheel 201. The wheel well 202 may comprise an opening defined by a wheel arch. As shown in Figures 2 to 4 and 8, the wheel well 202 may be at least partially open.

The aerodynamic device 200, 800 may comprise an aerodynamic body 206. The aerodynamic body 206 may be arranged to guide the airflow around the wheel 201. The aerodynamic body 206 may shroud the wheel 201. The aerodynamic body 206 may guide the airflow within the wheel cavity 203. The aerodynamic device 200, 800 may be arranged to guide the airflow down the side of the vehicle. The aerodynamic device 200, 800 may be arranged to guide the airflow into a cooling inlet. The vehicle may comprise an engine cooling inlet on the side of the vehicle. The aerodynamic device 200, 800 may be arranged to guide the airflow into the engine cooling inlet.

The aerodynamic device 200, 800 may receive an incoming airflow 210. The incoming airflow 210 may be a result of the vehicle, on which the aerodynamic device 100 is fitted, travelling at a certain velocity. The incoming airflow 210 may have the same velocity as the vehicle. The incoming airflow 210 may have a higher or lower velocity than the vehicle proximal to the aerodynamic device 100 due to local velocity changes, such as from the wheel 201 or the aerodynamic body 206.

When the vehicle is in forward motion, the incoming airflow 210 may pass through the wheel cavity 203. The wheel cavity 203 may comprise an inlet 204. The incoming airflow 210 may enter the wheel cavity 203 through the inlet 204. The incoming airflow 210 may move through the wheel cavity 203. The airflow 210 may pass around and/or over the wheel 201 in the wheel cavity 203. The wheel cavity 203 may comprise an outlet 205. The airflow 210 may exit the wheel cavity 203 through the outlet 205. The inlet 204 may be provided by a vent, or other opening, in the front bodywork through which the incoming airflow 210 may pass into the wheel cavity 203. The inlet 204 may also be provided by the underside of the wheel well 202 such that the incoming airflow 210 may also pass under the front bodywork and into the wheel cavity 203. The outlet 205 may be provided by a vent, or other opening, in the side bodywork through which the airflow may pass out of the wheel cavity 203. The outlet 205 may also be provided by the opening defined by the wheel arch such that the airflow 210 may also pass out of the wheel cavity 203 under the wheel arch.

The aerodynamic body 206 may be located in the wheel cavity 203. The aerodynamic body 206 may thus impart a force on the airflow through the wheel cavity 203. The aerodynamic body 206 may guide the airflow through the wheel cavity 203. The aerodynamic body 206 may be arranged to reduce the turbulence of the airflow through the wheel cavity 203. As shown in Figures 2 to 4 and 8, the airflow with the aerodynamic body 206 may be less turbulent than the airflow without the aerodynamic body 206 in Figure 1. The aerodynamic body 206 may guide the airflow around the rear of the wheel 201, with respect to the vehicle, so as to delay the separation off the rear face of the wheel 201 by helping the flow to make the corner and to remain attached along the wheel 201 radii.

The aerodynamic body 206 may be located between the wheel 201 and the wheel well 203. As shown in Figures 2 to 4 and 8, the aerodynamic body 206 may be located on the inboard side of the wheel 201, with respect to the vehicle. The aerodynamic body 206 may guide the airflow around the inboard side of the rear of the wheel 201, as shown in Figures 2 to 4 and 8. The aerodynamic body 206 may define a first passage 208 between the aerodynamic body 206 and the wheel well 203. The aerodynamic body 206 may define a second passage 209 between the aerodynamic body 206 and the wheel 201.

The incoming airflow 210 may be divided into a first airflow through the first passage 208 and a second airflow through the second passage 209. The first airflow may be on a first side of the aerodynamic body 206. The first side of the aerodynamic body 206 may be the inboard side of the aerodynamic body 206 with respect to the vehicle. The second airflow may be on a second side of the aerodynamic body 206. The second side of the aerodynamic body 206 may be the outboard side of the aerodynamic body 206 with respect to the vehicle. The aerodynamic body 206 may split the incoming airflow 210 into separate streamlines defined by the first and second airflows. By dividing the incoming airflow 210, the first and second airflows may pass down the sides of the aerodynamic body 206. In this way, the aerodynamic body 206 may delay the separation of the airflow from the wheel 201. This may allow the aerodynamics in the wheel cavity 203 to be controlled.

Figures 2 to 4 and 8 show a single aerodynamic body 206. That said, the aerodynamic device 200 may comprise a plurality of aerodynamic bodies 206. The number of aerodynamic bodies 206 may be dependent on the airflow guiding requirements for the aerodynamic device 200. The aerodynamic bodies 206 may be discrete. The aerodynamic bodies 206 may be separate from one another. The aerodynamic bodies 206 may be independent from one another. The aerodynamic bodies 206 may not be directly attached to one another. Although, the aerodynamic bodies 206 may be indirectly attached to one another via an intermediate component which is not one of the aerodynamic bodies 206. The aerodynamic bodies 206 may provide independent airflow guidance.

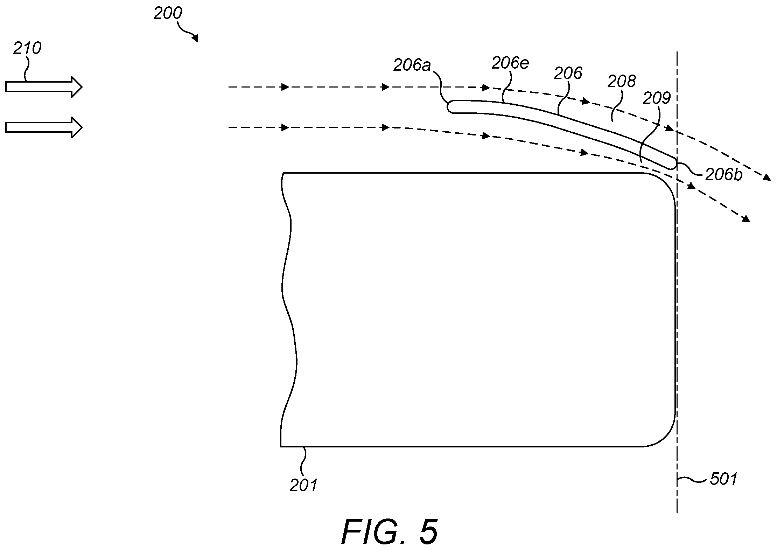

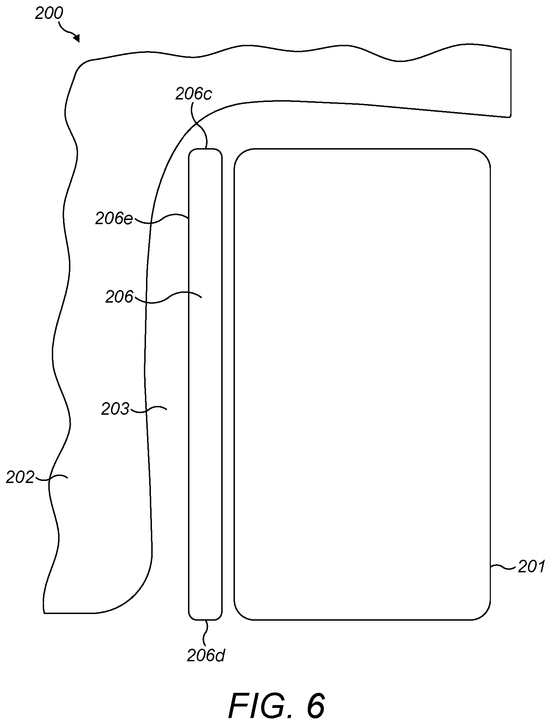

Figures 5 and 6 show a close-up view of the aerodynamic device 200. Figure 5 shows a side view, with respect to the vehicle. Figure 6 shows a front view, with respect to the vehicle. The aerodynamic body 206 may comprise a leading edge 206a, a trailing edge 206b and at least two outboard edges 206c, 206d. An aerodynamic surface 206e may extend between the edges 206a, 206b, 206c, 206d of the aerodynamic body 206a. The aerodynamic surface 206e may comprise an inboard side and an outboard side, with respect to the vehicle. In the case of a non-rectangular aerodynamic body 206, the edges 206a, 206b, 206c, 206d may be defined by the distal most points of the aerodynamic body 206. The leading edge 206a may be the forward-most point of the aerodynamic body 206, with respect to the vehicle. The trailing edge 206b may be the rearward-most point of the aerodynamic body 206, with respect to the vehicle. The upper edge 206c may be the upper-most point of the aerodynamic body 206, with respect to the vehicle. The lower edge 206a may be the lower-most point of the aerodynamic body 206, with respect to the vehicle.

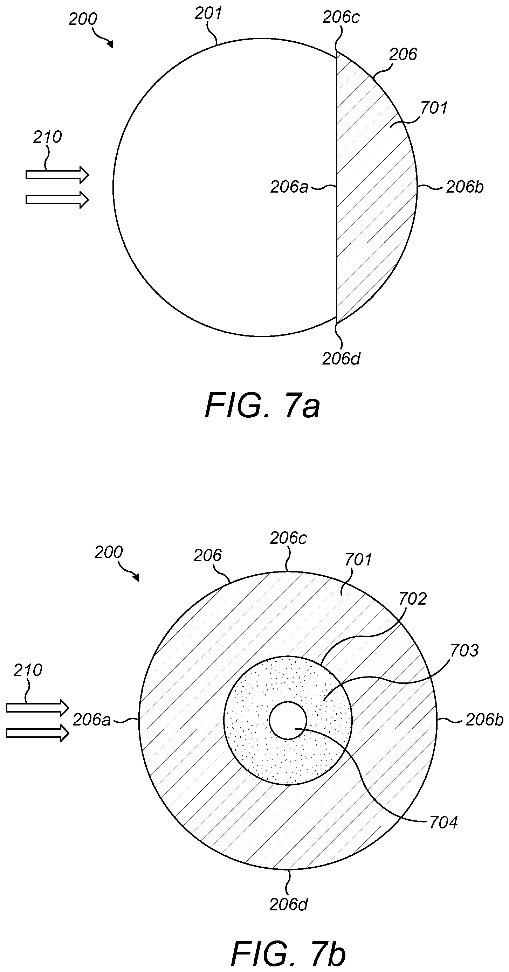

The aerodynamic body 206 may comprise a generally square or rectangular plan shape when viewed from the side. Alternatively, the aerodynamic body 206 may comprise a circular, or part circular shape, when viewed from the side, as shown in Figures 7a and 7b. The aerodynamic body 206 may comprise an aerofoil cross section when viewed from above. In this way, the aerodynamic body 206 may guide the airflow outboard of the vehicle and around the wheel 201. The aerofoil cross section may comprise non-zero chamber. This may provide a bias towards guiding the airflow in a certain direction. The aerodynamic body 206 may comprise a planar shape. In other words, the aerodynamic body 206 may be much taller and/or wider than they are thick. This may provide a large area for guiding the airflow. The aerodynamic body 206 may comprise a thin sheet. In other words, the aerodynamic body 206 may generally form a flat surface. This may be simpler to manufacture.

The aerodynamic body 206 may be located, with respect to the wheel 201, in an optimum location for guiding the airflow around the wheel 201 efficiently. The location of the aerodynamic body 206 may be fixed with respect to the wheel 201, for example if the aerodynamic body 206 is directly or indirectly attached to the wheel 201. The location of the aerodynamic body 206 may be fixed with respect to the position of the wheel 201, but not the rotation of the wheel 201, for example if the aerodynamic body 206 is directly or indirectly attached to the wheel mount. The location of the aerodynamic body 206 may not be fixed at all with respect to the wheel 201, but is fixed with respect to the vehicle, for example if the aerodynamic body 206 is directly or indirectly attached to the vehicle. If the wheel 201 movable with respect to the aerodynamic body 206, the locations of the aerodynamic body 206 described with reference to Figures 2 to 9, and with respect to the wheel 201, are when the wheel 201 is in a straight configuration. The straight configuration may be when the vehicle is driving in a straight line and the wheel 201 is parallel to the longitudinal axis of the vehicle. This may be applicable to the front wheels 201, or any which may be steerable (such as with four-wheel steering).

The aerodynamic body 206 may be located inboard of the wheel 201, with respect to the vehicle 206. The aerodynamic body 206 may be spaced from the wheel 201 so as to provide the second passage 209. The aerodynamic body 206 may be spaced from the wheel 201 so as to allow for movement of the wheel 201 with respect to the aerodynamic body 206, for example when the wheel 201 is steered.

Figure 2 illustrates a first embodiment of the aerodynamic device 200. The aerodynamic body 206 may be located towards the rear edge of the wheel 201. The aerodynamic surface 206e may extend along the side of the wheel 201. The aerodynamic surface 206e may extend between the leading edge 206a and the trailing edge 206b across at least a part of the width of the side of the wheel 201. The leading edge 206a and/or the trailing edge 206b may be aligned with the wheel 201 with respect to the side of the wheel 201. Figure 5 shows a close-up view of the aerodynamic body 206 and the wheel 201. The wheel 201 may comprise a rear edge 501. The trailing edge 206b of the aerodynamic body 206 may not extend beyond the rear edge 501 of the wheel 201. The leading edge 206a of the aerodynamic body 206 may extend towards the front of the wheel 201. In the embodiment shown in Figure 2, the aerodynamic body 206 may extend over a rear part of the wheel 201. The aerodynamic surface 206e may extend between the rear edge 501 of the wheel 201 and 10%, 20%, 30%, 40%, 50%, 60%, 70%, 80%, or 90% of the side of the wheel 201. For example, the aerodynamic surface 206e may extend over the rear 50% of the wheel 201 between the centre of the wheel 201 and the rear edge 501 of the wheel 201. Guiding the airflow 210 over the rear part of the wheel 201 may provide a greater influence on the airflow beyond the wheel 201 than guiding at the front part of the wheel 201. Therefore, only locating the aerodynamic body 206 towards the rear of the wheel 201 may save material while still providing guidance to the airflow. This may reduce the turbulence behind the wheel 201. Reducing the amount of material required can save weight, and also reduce drag.

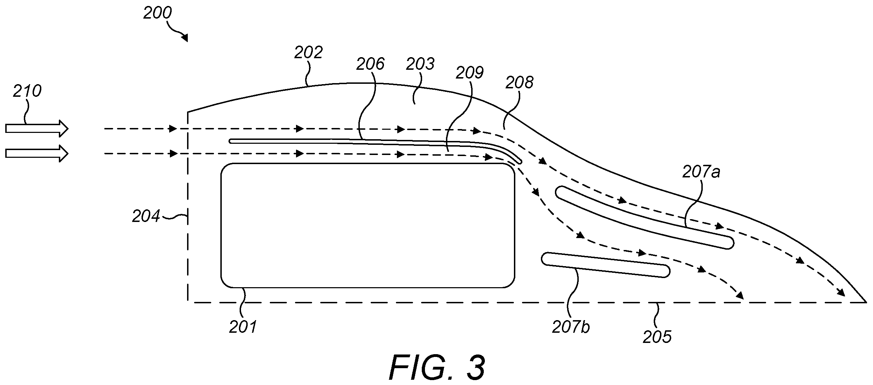

Figure 3 illustrates a second embodiment of the aerodynamic device 200. The aerodynamic body 206 may be located towards the rear edge of the wheel 201 and towards the front edge of the wheel 201. The aerodynamic surface 206e may extend along the side of the wheel 201. The aerodynamic surface 206e may extend between the leading edge 206a and the trailing edge 206b across at least the whole width of the side of the wheel 201. The leading edge 206a and the trailing edge 206b may be aligned with the front and rear edges of the wheel 201 with respect to the side of the wheel 201. The leading edge 206a of the aerodynamic body 206 may not extend beyond the front edge of the wheel 201. The trailing edge 206b of the aerodynamic body 206 may not extend beyond the rear edge 501 of the wheel 201. The leading edge 206a of the aerodynamic body 206 may extend towards the front of the wheel 201. In the embodiment shown in Figure 3, the aerodynamic body 206 may extend over a rear part of the wheel 201 and a front part of the wheel 201. The aerodynamic surface 206e may extend between the rear edge 501 of the wheel 201 and 100% of the side of the wheel 201 to the front edge 501 of the wheel 201. Guiding the airflow 210 over the entire width of the wheel 201 may provide greater influence on the airflow beyond the wheel 201 than only guiding at a part of the wheel 201. This may reduce the turbulence behind the wheel 201.

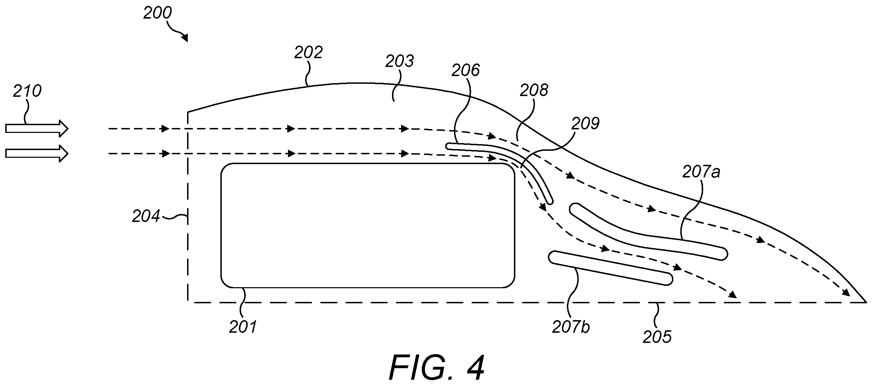

Figure 4 illustrates a third embodiment of the aerodynamic device 200. The aerodynamic body 206 may be located towards the rear edge of the wheel 201. The aerodynamic surface 206e may extend along the side of the wheel 201. The aerodynamic surface 206e may extend between the leading edge 206a and the trailing edge 206b across at least a part of the width of the side of the wheel 201. The leading edge 206a may be aligned with the wheel 201 with respect to the side of the wheel 201. The trailing edge 206b of the aerodynamic body 206 may extend beyond the rear edge 501 of the wheel 201. The leading edge 206a of the aerodynamic body 206 may extend towards the front of the wheel 201. In the embodiment shown in Figure 4, the aerodynamic body 206 may extend over a rear part of the wheel 201. The aerodynamic surface 206e may extend between the rear edge 501 of the wheel 201 and 10%, 20%, 30%, 40%, 50%, 60%, 70%, 80%, or 90% of the side of the wheel 201. For example, the aerodynamic surface 206e may extend over the rear 50% of the wheel 201 between the centre of the wheel 201 and the rear edge 501 of the wheel 201. The aerodynamic surface 206e may also extend beyond the rear edge 501 of the wheel 201. The aerodynamic surface 206e may extend beyond the rear edge 501 of the wheel 201 by a distance of 10%, 20%, 30%, 40%, or 50% of the width of the wheel 201. Guiding the airflow 210 beyond the rear edge 501 of the wheel 201 may provide a greater influence on the airflow beyond the wheel 201 than guiding along the side of the wheel 201. This may reduce the turbulence behind the wheel 201.

The aerodynamic surface 206e may also extend to wrap around the rear of the wheel 201. As shown in Figure 4, the aerodynamic body 206 may wrap from the side of the wheel 201 to the behind the rear of the wheel 201. The aerodynamic body 206 may wrap around the shoulder of the wheel 201. The aerodynamic body 206 may wrap around the rear inboard shoulder of the wheel 201. The aerodynamic body 206 may have at least a portion located directly behind the wheel 201. Wrapping the aerodynamic body 206 around the rear of the wheel 201 may guide the airflow down the side of the wheel 201 and then outboard of the wheel 201. This may reduce the turbulence behind the wheel 201.

The aerodynamic body 206 may be located so that the trailing edge 206b is closer to the wheel 201 than the leading edge 206a. Put another way, the leading edge 206a of the aerodynamic body 206 may be spaced further from the wheel 201 than the trailing edge 206b of the aerodynamic body 206. In this way, the airflow may be directed towards the outboard side of the wheel 201, pushing the airflow away from the vehicle. Further, the second airflow in the second passage 209 may be squeezed such that the velocity increases. This may reduce the turbulence behind the wheel 201.

The aerodynamic body 206 may be located so that the aerodynamic surface 206e becomes progressively closer to the wheel 201 between the leading edge 206a and the trailing edge 206b. Put another way, the leading edge 206a of the aerodynamic body 206 may be spaced further from the wheel 201 than the trailing edge 206b of the aerodynamic body 206 and the aerodynamic surface 206e may progressively become closer to the wheel 201 towards the rear of the wheel 201. In this way, the airflow may be directed towards the outboard side of the wheel 201, pushing the airflow away from the vehicle. Further, the second airflow in the second passage 209 may be progressively squeezed such that the velocity progressively increases. This may reduce the turbulence behind the wheel 201.

The embodiments shown in Figures 2 to 4 may be combined. For example, the aerodynamic surface 206e may extend less than, equal to, or more than the width of the side of the wheel 201, depending on the airflow guidance requirements. The aerodynamic surface 206a may also extend beyond the front of the wheel 201 and optionally wrap around the front of the wheel 201.

Figure 6 illustrates a front view of the aerodynamic device 200. The aerodynamic surface 206e may extend down the side of the wheel 201. The aerodynamic surface 206e may extend between the upper edge 206c and the lower edge 206d across at least a part of the height of the side of the wheel 201. The upper edge 206c and/or the lower edge 206d may be aligned with the wheel 201 with respect to the side of the wheel 201. The upper edge 206c of the aerodynamic body 206 may not extend beyond the upper edge of the wheel 201. The lower edge 206d may not extend beyond the upper edge of the wheel 201. The aerodynamic surface 206e may extend over 10%, 20%, 30%, 40%, 50%, 60%, 70%, 80%, 90% or 100% of the height of the side of the wheel 201. In the example shown in Figure 6, the aerodynamic surface 206e may extend over the whole height of the side of the wheel 201. Guiding the airflow over the height of the wheel provide a greater influence on the airflow beyond the wheel 201. This may reduce the turbulence behind the wheel 201.

The aerodynamic surface 206e may extend parallel to the side of the wheel 201. The aerodynamic surface 206e between the two outboard edges 206c, 206d may extend parallel to the side of the wheel 201. If the wheel 201 is vertical, the aerodynamic surface 206e may be vertical. In this way, the aerodynamic surface 206e may provide similar guidance across the height of the wheel 201. Alternatively, the aerodynamic surface 206e may not be flat between the upper edge 206c and the lower edge 206d. For example, the aerodynamic surface 206e may bow in to, or out from, the wheel 201 at the centre of the wheel 201. The shape of the aerodynamic surface 206e may be adapted depending on the design requirements.

The upper edge 206c of the aerodynamic body 206 may extend beyond the upper edge of the wheel 201. The lower edge 206c of the aerodynamic body 206 may extend beyond the lower edge of the wheel 201. The aerodynamic surface 206e may extend beyond the upper edge and/or lower edge of the wheel 201 by a distance of 10%, 20%, 30%, 40%, or 50% of the height of the wheel 201. Guiding the airflow 210 beyond the upper edge and/or lower edge of the wheel 201 may provide a further influence on the airflow beyond the wheel 201. This may reduce the turbulence behind the wheel 201.

The aerodynamic surface 206e may also extend to wrap around the top of the wheel 201. The aerodynamic body 206 may wrap from the side of the wheel 201 to the above the top of the wheel 201. The aerodynamic body 206 may wrap around the shoulder of the wheel 201. The aerodynamic body 206 may wrap around the top inboard shoulder of the wheel 201. The aerodynamic body 206 may have at least a portion located directly above the wheel 201. Wrapping the aerodynamic body 206 around the top of the wheel 201 may guide the airflow down the back of the wheel and then beyond the wheel 201. This may reduce the turbulence behind the wheel 201.

The incoming airflow 110 may cause primary vortices to be generated off the outboard edges of the aerodynamic body 206. The airflow may fall off the outboard edges of the aerodynamic body 206 generating primary vortices. The primary vortices may continue downstream rearwards of the aerodynamic body 206. The primary vortices may continue downstream and away from the wheel 201. This may reduce the turbulent airflow beyond the wheel 201, improving the guiding of the airflow.

Figures 7a and 7b show example side views of the first and second embodiments of the aerodynamic device 200.

Figure 7a shows an example in which the aerodynamic body 206 is shaped so as to cover a segment of the circle of the side of the wheel 201. As described herein, the greatest influence on the guidance of the airflow rearward of the wheel 201 is provided at the rear part of the wheel 201. The aerodynamic body 206 shown in Figure 7a may provide a good level of guidance on the airflow at the rear of the wheel 201, while also reducing the amount of material required. Reducing the amount of material required can save weight, and also reduce drag. Forming the aerodynamic body 206a to follow the shape of the wheel 201, e.g., a circle, can also reduce the likelihood of interference with other components. Not covering the whole of the side of the wheel 201 can also provide space for other components to be fitted inboard of the wheel 201. The segment of the aerodynamic body 206 may cover 10%, 20%, 30%, 40%, 50%, 60%, 70%, 80%, or 90% of the surface area of the side of the wheel 201. The aerodynamic body 206 may also overhang the perimeter of the side of the wheel 201. The aerodynamic body 206 may be formed of a single plate 701. The plate 701 may be rigid.

Figure 7b shows an example in which the aerodynamic body 206 is shaped so as to cover the whole the circle of the side of the wheel 201. The aerodynamic body 206 shown in Figure 7a may provide a good level of guidance on the airflow at across the entire side of the wheel 201. Forming the aerodynamic body 206a to follow the shape of the wheel 201, e.g., a circle, can also reduce the likelihood of interference with other components. The aerodynamic body 206 may also overhang the perimeter of the side of the wheel 201.

The wheel 201 may be mounted to the vehicle by a mounting unit. For example, the wheel mounting unit may be suspension structure, such as a wishbone structure. If the aerodynamic body 206 covers the entire inboard side of the wheel 201 (such as in Figure 7b), the mounting unit and/or the aerodynamic body 206 may need to be designed so as to still allow the wheel 201 to be mounted to the vehicle.

The aerodynamic body 206 may comprise a multi configuration and/or multi material structure. The aerodynamic body 206 may comprise a plurality of configurations. The aerodynamic body 206 may comprise a plurality of materials. The aerodynamic body 206 may be formed of a plate 701. The plate 701 may be rigid. The plate 701 may comprise an opening 702. The aerodynamic body 206 may also comprise a membrane 703. The membrane 703 may be flexible compared to the rigid plate 701. The membrane 703 may span part or all the opening 702. The membrane 701 may comprise a further opening 704. The wheel mounting unit may extend through the further opening 704. The membrane 701 may wrap tightly around the wheel mounting unit so as to reduce airflow escaping through the further opening 704. The flexible membrane 703 may allow the wheel mounting unit to move relative to the rigid plate 701. The flexible membrane 703 may permit the wheel mounting unit to move in the opening 702, for example to allow for suspension of the wheel 201.

The aerodynamic body 206 may be mounted to the wheel mounting unit. The wheel mounting unit may comprise a first component which is movable relative to the vehicle, but is fixed relative to the position of the wheel 201 (e.g., due to steering movement and/or suspension travel movement). If the aerodynamic body 206 is mounted to the first component of the wheel mounting unit, the aerodynamic body 206 may be fixed in relation to the position of the wheel 201 (e.g., due to steering movement and/or suspension movement), but movable relative to the rotation of the wheel 201. In other words, if the wheel 201 is moved through steering and/or suspension travel, the aerodynamic body 206 may move with the position of the wheel 201. The wheel mounting unit may comprise a second component which is fixed relative to the vehicle, but is movable relative to the position of the wheel 201 (e.g., due to steering movement and/or suspension travel movement). If the aerodynamic body 206 is mounted to the second component of the wheel mounting unit, the aerodynamic body 206 may be moveable in relation to the position of the wheel 201 (e.g., due to steering movement and/or suspension movement), and movable relative to the rotation of the wheel 201. In other words, if the wheel 201 is moved through steering and/or suspension travel, the aerodynamic body 206 may move relative to the position of the wheel 201.

The aerodynamic body 206 may be mounted to the wheel well 202. If the aerodynamic body 206 is mounted to the wheel well 202, the aerodynamic body 206 may be moveable in relation to the position of the wheel 201 (e.g., due to steering movement and/or suspension movement), and movable relative to the rotation of the wheel 201. In other words, if the wheel 201 is moved through steering and/or suspension travel, the aerodynamic body 206 may move relative to the position of the wheel 201.

The aerodynamic body 206 may be mounted to the wheel 201. If the aerodynamic body 206 is mounted to the wheel, the aerodynamic body 206 may be fixed in relation to the position of the wheel 201 (e.g., due to steering movement and/or suspension movement), and fixed relative to the rotation of the wheel 201. In other words, if the wheel 201 is moved through steering and/or suspension travel, the aerodynamic body 206 may move with the position of the wheel 201. Additionally, if the wheel 201 is rotated, the aerodynamic body 206 may move with the rotation of the wheel 201.

The aerodynamic device 200, 800 may further comprise one or more further aerodynamic bodies 207a, 207b. The further aerodynamic bodies 207a, 207b are shown in Figures 2 to 4 and 8 to 10.

Each further aerodynamic body 207a, 207b may be located, with respect to the wheel 201, in an optimum location for guiding the airflow behind the wheel 201 efficiently. The location of the further aerodynamic body 207a, 207b may be fixed with respect to the wheel 201, for example if the further aerodynamic body 207a, 207b is directly or indirectly attached to the wheel 206. The location of the further aerodynamic body 207a, 207b may be fixed with respect to the position of the wheel 206, but not the rotation of the wheel, for example if the further aerodynamic body 207a, 207b is directly or indirectly attached to the wheel mount. The location of the further aerodynamic body 207a, 207b may not be fixed at all with respect to the wheel 201, but is fixed with respect to the vehicle, for example if the further aerodynamic body 207a, 207b is directly or indirectly attached to the vehicle. If the wheel 201 movable with respect to the further aerodynamic body 207a, 207b, the locations of the further aerodynamic body 207a, 207b described with reference to Figures 2 to 4 and 8 to 10, and with respect to the wheel 201, are when the wheel 201 is in a straight configuration. The straight configuration may be when the vehicle is driving in a straight line and the wheel 201 is parallel to the longitudinal axis of the vehicle. This may be applicable to the front wheels 201, or any which may be steerable (such as with four-wheel steering).

Each of the further aerodynamic bodies 207a, 207b may be located rearwards of the aerodynamic body 206. Each of the further aerodynamic bodies 207a, 207b may be arranged to guide the airflow rearwards of the aerodynamic body 206. Each of the further aerodynamic bodies 207a, 207b may be wholly located rearwards of the trailing edge 206b of the aerodynamic body 206. In this way, the airflow may pass from the aerodynamic body 206 to each of the further aerodynamic bodies 207a, 207b.

Each of the further aerodynamic bodies 207a, 207b may be located rearwards of the wheel 201. In this way, the further aerodynamic bodies 207a, 207b may add further guidance to the airflow rearwards of the wheel 201. This may reduce the turbulence behind the wheel 201. Each of the further aerodynamic bodies 207a, 207b may be wholly located rearwards of the rear edge 501 of the wheel 201.

One or more of the further aerodynamic bodies 207a, 207b may be located in the wheel cavity 203. In this way, the further aerodynamic bodies 207a, 207b may add further guidance to the airflow in the wheel cavity 203. This may reduce the turbulence in the wheel cavity 203. Each of the further aerodynamic bodies 207a, 207b may be wholly located in the wheel cavity 203.

One or more of the further aerodynamic bodies 207a, 207b may be located outside of the wheel cavity 203. In this way, the further aerodynamic bodies 207a, 207b may add further guidance to the airflow outside of the wheel cavity 203, such as down the side of the vehicle. This may reduce the turbulence outside of the wheel cavity 203, such as down the side of the vehicle. Each of the further aerodynamic bodies 207a, 207b may be wholly located outside of the wheel cavity 203.

The further aerodynamic bodies 207a, 207b may comprise a leading edge, a trailing edge and at least two outboard edges. An aerodynamic surface may extend between the edges of the further aerodynamic bodies 207a, 207b. The aerodynamic surface may comprise an inboard side and an outboard side, with respect to the vehicle. In the case of a non-rectangular further aerodynamic body 207a, 207b, the edges may be defined by the distal most points of the further aerodynamic body 207a, 207b. The leading edge may be the forward-most point of the further aerodynamic body 207a, 207b, with respect to the vehicle. The trailing edge may be the rearward-most point of the further aerodynamic body 207a, 207b, with respect to the vehicle. The upper edge may be the upper-most point of the further aerodynamic body 207a, 207b, with respect to the vehicle. The lower edge may be the lower-most point of the further aerodynamic body 207a, 207b, with respect to the vehicle.

The further aerodynamic body 207a, 207b may comprise a generally square or rectangular plan shape when viewed from the side. The further aerodynamic body 207a, 207b may comprise an aerofoil cross section when viewed from above. In this way, the further aerodynamic body 207a, 207b may guide the airflow outboard of the vehicle behind the wheel 201. The aerofoil cross section may comprise non-zero chamber. This may provide a bias towards guiding the airflow in a certain direction. The further aerodynamic body 207a, 207b may comprise a planar shape. In other words, the further aerodynamic body 207a, 207b may be much taller and/or wider than they are thick. This may provide a large area for guiding the airflow. The further aerodynamic body 207a, 207b may comprise a thin sheet. In other words, further aerodynamic body 207a, 207b may generally form a flat surface. This may be simpler to manufacture.

Two further aerodynamic bodies 207a, 207b are shown in Figures 2 to 4 and 8 to 10 - a first further aerodynamic body 207a and a second further aerodynamic body 207b. A different number of further aerodynamic bodies 207a, 207b may be provided depending on the airflow guidance requirements.

The further aerodynamic bodies 207a, 207b may be arranged so that the streamlines are continued from the aerodynamic body 206. The first further aerodynamic body 207a is located such that the first airflow in the first passage 208 continues inboard of the first further aerodynamic body 207a. The first further aerodynamic body 207a is located such that the second airflow in the second passage 209 continues outboard of the first further aerodynamic body 207a. The second further aerodynamic body 207b is located such that the second passage 209 continues inboard of the second further aerodynamic body 207b. In this way, the turbulent airflow may be reduced.

The incoming airflow 110 may cause secondary vortices to be generated off the outboard edges of the further aerodynamic bodies 207a, 207b. The airflow may fall off the outboard edges of the further aerodynamic bodies 207a, 207b generating secondary vortices. The secondary vortices may continue downstream rearwards of the further aerodynamic bodies 207a, 207b. The secondary vortices may continue downstream and away from the wheel 201. This may reduce the turbulent airflow beyond the wheel 201, improving the guiding of the airflow.

Figure 8 illustrates a fourth embodiment of the aerodynamic device 800. The aerodynamic device 800 may comprise a brake duct 801. The aerodynamic device 800 may comprise the aerodynamic body 206 and/or the brake duct 801. The aerodynamic body 206 may be located rearwards of the brake duct 801.

The brake duct 801 may be located in the wheel cavity 203. The brake duct 801 may thus impart a force on the airflow through the wheel cavity 203. The brake duct 801 may guide the airflow through the wheel cavity 203. The brake duct 801 may be arranged to direct airflow to a brake of the wheel 201. As shown in Figure 8, the airflow may be divided off into the brake. The brake duct 801 may also be arranged to reduce the turbulence of the airflow through the wheel cavity 203. As shown in Figure 8, the airflow with the brake duct 801 may be less turbulent than the airflow without the brake duct 801 in Figure 1. The brake duct 801 may remove some airflow around the wheel 201, so as to delay the separation off the rear face of the wheel 201 by helping the flow to make the corner and to remain attached along the wheel 201 radii.

The brake duct 801 may be located between the wheel 201 and the wheel well 203. As shown in Figure 9, the brake duct 801 may be located on the inboard side of the wheel 201, with respect to the vehicle. The brake duct 801 may guide the airflow around the inboard side of the wheel 201, as shown in Figure 8. The brake duct 801 may define a third passage 802 between the brake duct 801 and the wheel 201.

The incoming airflow 210 may be divided into a first airflow through the first passage 208, a second airflow through the second passage 209 and a third airflow through the third passage 802. The first airflow may be on a first side of the aerodynamic body 206. The first side of the aerodynamic body 206 may be the inboard side of the aerodynamic body 206 with respect to the vehicle. The second airflow may be on a second side of the aerodynamic body 206 and a first side of the brake duct 801. The second side of the aerodynamic body 206 may be the outboard side of the aerodynamic body 206 with respect to the vehicle. The first side of the brake duct 801 may be the inboard side of the brake duct 801 with respect to the vehicle. The third airflow may be on a second side of the brake duct 801. The second side of the brake duct 801 may be the outboard side of the brake duct 801 with respect to the vehicle.

The brake duct 801 may split the incoming airflow 210 into separate streamlines defined by the second and third airflows. By dividing the incoming airflow 210, the second airflow may pass down the inboard side of the brake duct 801 and the third airflow may pass inside of the brake duct 801. In this way, the airflow may be directed through the third passage to the brake of the wheel 201. Additionally, the brake duct 801 may delay the separation of the airflow from the wheel 201. This may allow the aerodynamics in the wheel cavity 203 to be controlled.

The passage may comprise an inlet and an outlet. The inlet may face the incoming flow 210. The outlet my face the brake. The inlet may receive the incoming flow such that the third airflow flows into the tube. The outlet may output the airflow to the brake. The brake may be cooled by the third airflow. The brake duct 801 may comprise a tube. The tube may define the third passage 802. The inlet to the tube may face the incoming flow 210. The inlet to the tube may protrude from the inboard side of the wheel 201 into the wheel cavity 203. The airflow may enter the tube and be directed outboard to the brake of the wheel 201. Alternatively, the brake duct 801 may comprise a slat, such as a louvre. The inlet of the slat may face the incoming flow 210. The inlet to the slat may protrude from the inboard side of the wheel 201 into the wheel cavity 203. The airflow may enter the slat and be directed outboard to the brake of the wheel 201.

Figure 9 schematically illustrates a perspective view of the fourth embodiment of the aerodynamic device 800.

The aerodynamic body 206 is shown in Figure 9. The aerodynamic body 206 may comprise a segment of the circle of the wheel 201. The aerodynamic body 206 may cover a rear portion of the wheel 201. The aerodynamic body 206 may be curved in a plane perpendicular to the inboard side of the wheel 201. The aerodynamic body 206 may wrap around the rear edge of the wheel 201.

The aerodynamic body 206 may be fixed to a support structure 903. The aerodynamic body 206 may be fixed to the support structure 903 by one or more struts 901. The struts 901 may extend from the support structure 903 in the inboard direction to the aerodynamic body 206. The struts 901 may have a major surface perpendicular the incoming airflow 210. In this way, the drag from the struts 901 may be reduced.

The brake duct 801 is shown in Figure 9. The brake duct 801 may comprise a tube. The brake duct 801 may cover an upper portion of the wheel 201. The brake duct 801 may be curved in a plane perpendicular to the inboard side of the wheel 201. The brake duct 801 may direct the airflow 210 in an outboard direction.

The brake duct 801 may be fixed to the support structure 903.

The brake 904 of the wheel 201 is shown in Figure 9. The brake duct 801 is arranged to direct the incoming airflow 210 down the break duct 801 to the brake 904.

The brake duct 801 may further comprise a brake duct aerodynamic body 902. The brake duct aerodynamic body 902 may function in the same way as the aerodynamic body 206 as described herein. The brake duct aerodynamic body 902 may be fixed to the brake duct 801. The brake duct aerodynamic body 902 may extend from the tube of the brake duct 801. The brake duct aerodynamic body 902 may extend from a side of the brake duct 801. The brake duct aerodynamic body 902 may follow the curvature of the brake duct 801. The brake duct aerodynamic body 902 may follow the curvature of the aerodynamic body 206. The brake duct aerodynamic body 902 may be arranged to guide the airflow in tandem with the aerodynamic body 206.

The mounting unit 905 of the wheel 201 is shown in Figure 9. The mounting unit 905 shown in Figure 9 is a wishbone suspension unit 905. The wishbone suspension unit 905 may comprise a damper 906.

The support structure 903 may be fixed to the mounting unit 905. The support structure 903 may move with the mounting unit 905. As a result, the aerodynamic body 206 and/or the brake duct 801 may move with the mounting unit 905. Alternatively, the aerodynamic body 206 and/or the brake duct 801 may not be fixed to the mounting unit 905.

The wheel 201 may comprise a tyre 907. The wheel 201 may comprise a rim 908. The support structure 903 may be located inside the rim 908. The aerodynamic body 206 may extend and wrap over the rim 908 and the tyre 907. The aerodynamic body 206 may shroud the rim 908 and/or the tyre 907.

The aerodynamic body 206 and/or the further aerodynamic bodies 207a, 207b may be made from a metallic material and/or a composite material. The composite material may comprise one or more of: Metal Matrix Composites (MMCs), Polymer Matrix Composites (PMCs), Glass Fiber Reinforced Polymers (GFRPs), and Carbon Fiber Reinforced Polymers (CFRPs).

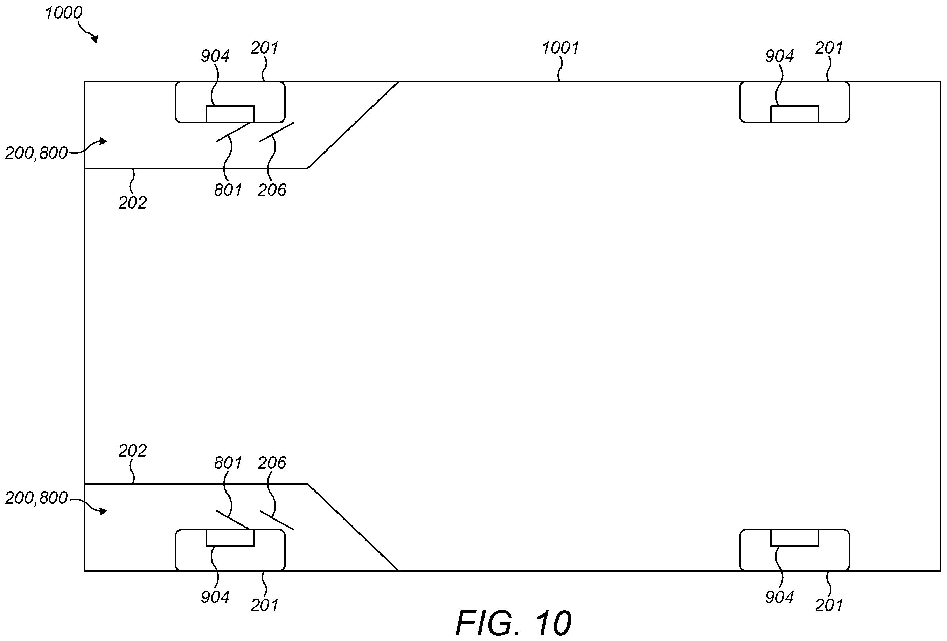

The aerodynamic device 200, 800 described herein may be implemented on a vehicle, such as a car. In particular, the aerodynamic device 200, 800 may be implemented on a sports car or racing car in which there are requirements for improved aerodynamics. A vehicle may comprise the aerodynamic device 100 described herein. Figure 10 illustrates the aerodynamic device 100 fitted to a vehicle 1000.

Figure 10 shows an example vehicle 1000 with the aerodynamic device 200, 800 implemented. The vehicle 1000 may comprise one or more aerodynamic devices 200, 800.

The vehicle 1000 may comprise a pair of front wheels 201. The vehicle 1000 may comprise a pair of rear wheels 201. The pair of front wheels 201 and/or the pair of rear wheels 201 may be driven. The wheels 201 may be driven by a combustion engine and/or one or more electric motors. The wheels 201 may be located inboard of bodywork 1003 of the vehicle 1000. The bodywork of the 1003 may define the outer perimeter of the vehicle 1000.

As shown in Figure 10, the aerodynamic device 200, 800 may be located inboard of the front wheels 701. The system 400 may comprise a plurality of aerodynamic device 200, 800. A first aerodynamic device 200, 800 may be located on a first side of the vehicle and a second aerodynamic device 200, 800 may be located on a second side of the vehicle (as shown in Figure 10). A first aerodynamic device 200, 800 may be provided for the front left wheel 201. A second aerodynamic device 200, 800 may be provided for the front right wheel 201. Further aerodynamic devices 200, 800 may also be provided for the rear wheels 201.

The terms "vertical", "horizontal", "forward", "backward", "lower", "upper", "above", "below", "side", "length", "width", "inboard", and "outboard" used herein are used with respect to the forward driving direction of the vehicle 1000, when the vehicle 1000 is on a flat, level surface. For example, vertical may be a line normal to the floor of the vehicle 1000. Horizontal may be a line parallel to the floor of the vehicle 1000. Forward and backward may be directions along the horizontal line. Upper, lower, above, and below, may be positions along the vertical line. The length of the vehicle 1000 may be measured between the front and rear of the vehicle 1000. The width of the vehicle 1000 may be measured between the sides of the vehicle. Inboard may be towards the centre of the vehicle along the horizontal line. Outboard may be towards the sides of the vehicle along the horizontal line.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description, it will be evident to a person skilled in the art that various modifications may be made within the scope of the invention.

### ANNEX

Some numbered statements are provided below, which form part of this disclosure:
1. An aerodynamic device for guiding airflow around a wheel of a vehicle, the device comprising:
   a wheel well defining a wheel cavity arranged to receive the wheel, the wheel cavity comprising an inlet and an outlet, so that when the vehicle is in forward motion, incoming airflow enters the wheel cavity at the inlet, moves through the wheel cavity, and exits the wheel cavity at the outlet; and
   an aerodynamic body located in the wheel cavity and between the wheel well and the wheel, the aerodynamic body defining a first passage between the aerodynamic body and the wheel well and a second passage between the aerodynamic body and the wheel, so that when the incoming airflow moves through the wheel cavity, the incoming airflow is divided into a first airflow through the first passage and a second airflow through the second passage.
2. The aerodynamic device according to statement 1, wherein the aerodynamic body comprises a leading edge, a trailing edge, at least two outboard edges and an aerodynamic surface extending therebetween.
3. The aerodynamic device according to statement 2, wherein the aerodynamic body is located so that the aerodynamic surface between the leading edge and the trailing edge extends across at least a part of the width of a side of the wheel.
4. The aerodynamic device according to statement 3, wherein the aerodynamic body is located so that the aerodynamic surface between the leading edge and the trailing edge extends across at least the whole of the width of the side of the wheel.
5. The aerodynamic device according to any of statements 2 to 4, wherein the aerodynamic body is located so that the aerodynamic surface extends rearwards of the wheel.
6. The aerodynamic device according to any of statements 2 to 5, wherein the aerodynamic body is located so that the aerodynamic surface extends between the leading edge and the trailing edge across at least a part of the width of a side of the wheel and wraps around the rear of the wheel.
7. The aerodynamic device according to any of statements 2 to 6, wherein the aerodynamic body is located so that the trailing edge of the aerodynamic body is closer to the wheel than the leading edge of the aerodynamic body.
8. The aerodynamic device according to statement 7, wherein the aerodynamic body is located so that the aerodynamic surface becomes progressively closer to the wheel between the leading edge of the aerodynamic body and the trailing edge of the aerodynamic body.
9. The aerodynamic device according to any of statements 2 to 8, wherein the aerodynamic body is located so that the aerodynamic surface between the two outboard edges extends across the whole of the height of the side of the wheel.
10. The aerodynamic device according to any of statements 2 to 9, wherein the aerodynamic surface between the two outboard edges extends parallel to the side of the wheel.
11. The aerodynamic device according to any preceding statement, wherein the aerodynamic body comprises an aerofoil cross section.
12. The aerodynamic device according to any preceding statement, wherein the aerodynamic body comprises a planar shape.
13. The aerodynamic device according to any preceding statement, wherein the aerodynamic body comprises:
   a rigid plate comprising an opening;
   a membrane spanning the opening of the plate and comprising a further opening.
14. The aerodynamic device according to any of statements 2 to 13, wherein the device is arranged such that incoming airflow to the vehicle causes primary vortices to be generated off the outboard edges of the aerodynamic body.
15. The aerodynamic device according to any preceding statement, wherein the device further comprises the wheel, the wheel being received in the wheel cavity.
16. The aerodynamic device according to statement 15, wherein the device further comprises wheel mounting unit, the wheel being mountable to the vehicle via the wheel mounting unit.
17. The aerodynamic device according to statement 16, wherein the aerodynamic body is mounted to the wheel mounting unit.
18. The aerodynamic device according to any preceding statement, wherein the aerodynamic body is mounted to the wheel well.
19. The aerodynamic device according to any of statements 1 to 16, wherein the aerodynamic body is mounted to the wheel.
20. The aerodynamic device according to any of statements 16 to 19 when dependent on statement 13, wherein the wheel mounting unit extends through the further opening.
21. The aerodynamic device according to any preceding statement, wherein the device further comprises one or more further aerodynamic bodies located rearwards of the aerodynamic body.
22. The aerodynamic device according to statement 21, wherein one or more of the further aerodynamic bodies are located rearwards of the wheel.
23. The aerodynamic device according to statement 21 or 22, wherein one or more of the further aerodynamic bodies are located in the wheel cavity.
24. The aerodynamic device according to any of statements 21 to 23, wherein one or more of the further aerodynamic bodies are located outside of the wheel cavity.
25. The aerodynamic device according to any of statements 21 to 24, wherein the device is arranged such that incoming airflow to the vehicle causes secondary vortices to be generated off the outboard edges of the one or more further aerodynamic bodies.
26. The aerodynamic device according to any preceding statement, the device further comprising a brake duct located in the wheel cavity and between the wheel well and the wheel, the brake duct defining a third passage between the brake duct and the wheel, so that when the incoming airflow moves through the wheel cavity, the incoming airflow is divided into the first airflow through the first passage, the second airflow through the second passage and a third airflow through the third passage, the third airflow being directed through the third passage to a brake of the wheel.
27. The aerodynamic device according to statement 26, wherein the aerodynamic body is located rearwards of the brake duct.
28. The aerodynamic device according to statement 26 or 27, wherein the brake duct comprises a tube defining the third passage.
29. The aerodynamic device according to any preceding statement, wherein the device further comprises the brake of the wheel.
30. A vehicle comprising the aerodynamic device according to any preceding statement.
31. A vehicle according to statement 30, further comprising a further aerodynamic device according to any of statements 1 to 29, the aerodynamic device and the further aerodynamic device being configured for use with the front wheels of the vehicle respectively.

End of description.

## Claims

1. An aerodynamic device for guiding airflow around a wheel of a vehicle, the device comprising:
a wheel well defining a wheel cavity arranged to receive the wheel, the wheel cavity comprising an inlet and an outlet, so that when the vehicle is in forward motion, incoming airflow enters the wheel cavity at the inlet, moves through the wheel cavity, and exits the wheel cavity at the outlet; and
an aerodynamic body located in the wheel cavity and between the wheel well and the wheel, the aerodynamic body defining a first passage between the aerodynamic body and the wheel well and a second passage between the aerodynamic body and the wheel, so that when the incoming airflow moves through the wheel cavity, the incoming airflow is divided into a first airflow through the first passage and a second airflow through the second passage.

2. The aerodynamic device according to claim 1, wherein the aerodynamic body comprises a leading edge, a trailing edge, at least two outboard edges and an aerodynamic surface extending therebetween.

3. The aerodynamic device according to claim 2, wherein the aerodynamic body is located so that the aerodynamic surface between the leading edge and the trailing edge extends across at least a part of the width of a side of the wheel, optionally wherein the aerodynamic body is located so that the aerodynamic surface between the leading edge and the trailing edge extends across at least the whole of the width of the side of the wheel.

4. The aerodynamic device according to claim 2 or 3, wherein the aerodynamic body is located so that the aerodynamic surface extends rearwards of the wheel, and/or wherein the aerodynamic body is located so that the aerodynamic surface extends between the leading edge and the trailing edge across at least a part of the width of a side of the wheel and wraps around the rear of the wheel.

5. The aerodynamic device according to any of claims 2 to 4, wherein the aerodynamic body is located so that the trailing edge of the aerodynamic body is closer to the wheel than the leading edge of the aerodynamic body, optionally wherein the aerodynamic body is located so that the aerodynamic surface becomes progressively closer to the wheel between the leading edge of the aerodynamic body and the trailing edge of the aerodynamic body.

6. The aerodynamic device according to any of claims 2 to 5, wherein the aerodynamic body is located so that the aerodynamic surface between the two outboard edges extends across the whole of the height of the side of the wheel, and/or wherein the aerodynamic surface between the two outboard edges extends parallel to the side of the wheel.

7. The aerodynamic device according to any preceding claim, wherein the aerodynamic body comprises an aerofoil cross section, and/or wherein the aerodynamic body comprises a planar shape.

8. The aerodynamic device according to any preceding claim, wherein the aerodynamic body comprises:
a rigid plate comprising an opening;
a membrane spanning the opening of the plate and comprising a further opening.

9. The aerodynamic device according to any of claims 2 to 8, wherein the device is arranged such that incoming airflow to the vehicle causes primary vortices to be generated off the outboard edges of the aerodynamic body.

10. The aerodynamic device according to any preceding claim, wherein the device further comprises the wheel, the wheel being received in the wheel cavity, and optionally a wheel mounting unit, the wheel being mountable to the vehicle via the wheel mounting unit, and optionally wherein the aerodynamic body is mounted to the wheel mounting unit.

11. The aerodynamic device according to any preceding claim, wherein the aerodynamic body is mounted to the wheel well, or alternatively wherein the aerodynamic body is mounted to the wheel.

12. The aerodynamic device according to any preceding claim, wherein the device further comprises one or more further aerodynamic bodies located rearwards of the aerodynamic body, optionally wherein one or more of the further aerodynamic bodies are located rearwards of the wheel.

13. The aerodynamic device according to claim 12, wherein the device is arranged such that incoming airflow to the vehicle causes secondary vortices to be generated off the outboard edges of the one or more further aerodynamic bodies.

14. The aerodynamic device according to any preceding claim, the device further comprising a brake duct located in the wheel cavity and between the wheel well and the wheel, the brake duct defining a third passage between the brake duct and the wheel, so that when the incoming airflow moves through the wheel cavity, the incoming airflow is divided into the first airflow through the first passage, the second airflow through the second passage and a third airflow through the third passage, the third airflow being directed through the third passage to a brake of the wheel.

15. A vehicle comprising the aerodynamic device according to any preceding claim.
